# EUROPEAN PATENT SPECIFICATION

(11) **EP 0 307 907 B1**
(45) Date of publication and mention of the grant of the patent: **17.02.1993**
(21) Application number: 88115118.7
(22) Date of filing: 15.09.1988
(51) Int. Cl.: C08F 10/00, C08F 4/62

(54) **Process for olefin polymerization**
Verfahren zur Olefinpolymerisation
Procédé de polymérisation d'oléfines

(30) Priority: 18.09.1987 US 98153
(43) Date of publication of application: 22.03.1989
(73) Proprietor: PHILLIPS PETROLEUM COMPANY, Bartlesville Oklahoma 74004 (US)
(72) Inventor: Boggs, Elizabeth Ann, Bartlesville Oklahoma 74006 (US)
(74) Representative: Dost, Wolfgang, Dr.rer.nat., Dipl.-Chem.

(56) References cited:
- EP-A- 0 000 748
- EP-A- 0 002 673
- EP-A- 0 279 890
- US-A- 3 658 777
- US-A- 4 364 840

## Description

### BACKGROUND OF THE INVENTION

This invention relates to the polymerization of a mono-1-olefin such as ethylene using a modified silica-supported chromium oxide catalyst and hydrogen.

It is well known that mono-1-olefins such as ethylene can be polymerized with catalyst systems employing vanadium, chromium or other metals on a support such as alumina, silica, aluminum phosphate, titania, zirconia, magnesia, or other refractory materials. Initially such catalysts were used primarily to form homopolymers of ethylene. It soon developed, however, that many applications required polymers which were more impact resistant than ethylene homopolymers. Consequently, in order to produce polymer having short chain branching like the more flexible free radical polymerized ethylene polymers, comonomers such as propylene, butene, hexene or the higher olefins were copolymerized with the ethylene to provide resins tailored to specific end uses. The copolymers, however, are more expensive to produce since inventories of different monomers must be kept and also the comonomers are generally more expensive than ethylene. Linear ethylene polymers with short chain branching can be formed from a pure ethylene feed using the old free radical high pressure process, but the conditions necessary to do this make the product too expensive to be commercially competitive.

Additional control over the polymerization process and the resultant polymer is also desired. A process to consistently reduce the density of linear ethylene polymers and to more efficiently produce and incorporate comonomers into the linear ethylene polymer is economically advantageous. A shift in the polymer branch distribution, wherein the branch length is decreased and the amount of branching is increased, is also economically desirable.

### SUMMARY OF THE INVENTION

Accordingly it is an object of this invention to provide a low cost route to linear ethylene polymers having toughness imparted by short chain branching.

It is a further object of this invention to provide a process by which ethylene polymers having the properties associated with copolymers can be obtained from a pure ethylene feed.

It is yet a further object of this invention to provide an improved polymerization process.

It is a further object of this invention to provide a novel polymerization process to control polymer density.

It is yet a further object of this invention to provide a novel polymerization process to improve comonomer production and incorporation into ethylene polymers.

It is a further object of this invention to provide a novel polymerization process to shift olefin distribution.

It is a further object of this invention to provide a novel polymerization process to control polymer short chain branching.

EP-A-279 890 to be considered under Article 54(3) EPC discloses an ethylene polymerization catalyst comprising a chromium component on a silica-titania cogel support containing from 2 to 5 weight percent titania.

The present invention relates to a process in accordance with claim 1.

In accordance with this invention, an essentially ethylene feed is contacted under polymerization conditions with a catalyst comprising chromium on a high titania silica-titania cogel support having a titania content from 8 to 19 wt-%. Said catalyst is first activated in an oxygen-containing ambient, thereafter reduced with carbon monoxide and then precontacted with a cocatalyst selected from the group consisting of trialkyl boron compounds, dialkyl aluminum alkoxide compounds, trialkyl alumium compounds, and mixtures thereof. Additionally, hydrogen is introduced into the polymerization reactor in an amount sufficient to give a polymerization product having a density in the range of about 0.915 to about 0.965 g/ml.

### DESCRIPTION OF THE PREFERRED EMBODIMENTS

### Catalyst

The catalyst support must be a high titania (TiO₂) silica-titania cogel support. The support preferably comprises at least about 60 weight percent silica and 8 to 19 weight percent titania, based on the total weight of silica, titania, and any other refractory component present. Other oxides such as alumina or zirconia can also be present in the support.

Silica-titania supports are well known in the art and can be produced as disclosed in Dietz, U.S. 3,887,494.

The catalyst component must be a chromium compound. The chromium component can be combined with the silica-titania component in any manner known in the art, such as forming a coprecipitated tergel of the silica, titanium and chromium components. Alternatively, an aqueous solution of a water soluble chromium component can be added to the hydrogel of silica-titania component. Suitable chromium compounds include, but are not limited to, chromium nitrate, chromium acetate, and chromium trioxide. Alternatively, a solution of a hydrocarbon soluble chromium component, such as tertiary butyl chromate, a diarene chromium compound, biscyclopentadienyl chromium II or chromium acetyl acetonate, can be used to impregnate the silica-titania xerogel, which results from removal of water from the hydrogel.

The chromium component is used in an amount sufficient to give about 0.05 to about 5, preferably about 0.5 to about 2 weight percent chromium based on the total weight of the chromium and support after activation.

The resulting chromium component on the high titania silica-titania support is then subjected to activation in an oxygen-containing ambient in a manner conventionally used in the art. Because of economy, the preferred oxygen-containing ambient is air, preferably dry air. The activation is carried out at an elevated temperature for about one half to about 50 hours, preferably about 2 to about about 10 hours at a temperature within the range of about 400° to about 900°C. Under these conditions, at least a substantial portion of any chromium in a lower valent state is converted to the hexavalent form by this calcination procedure.

The resulting calcined supported catalyst component is cooled and then subjected to at least partial reduction of the hexavalent chromium to a lower valent state prior to combining with the cocatalyst. The reducing agent must be carbon monoxide. The carbon monoxide can be employed at temperatures between about 300° and about 500°C although it is more often employed at temperatures in the range of about 350° to about 450°C. The partial pressure of the reducing gas in the reduction operation can be varied from subatmospheric pressures to relatively high pressures, but the simplest reducing operation is to utilize essentially pure carbon monoxide at about atmospheric pressure.

The reduction time can vary from a few minutes to several hours or more. The extent of reduction can be followed by visual inspection of catalyst color. The color of the initial activated catalyst is generally orange, indicating the presence of hexavalent chromium. The color of the reduced catalyst employed in the invention is blue, indicating that all or substantially all of the initial hexavalent chromium has been reduced to lower oxidation states, generally the divalent state.

The course of the reduction of the air-activated orange catalyst with carbon monoxide can be determined exactly by pulse titration. A known amount of carbon monoxide is added per pulse and the amount of evolved carbon dioxide is measured. When reduction is complete, only carbon monoxide will be present and the catalyst is blue in color. The reduced blue catalyst can be titrated with pulses of oxygen to convert the catalyst to the original orange color. When oxidation is complete, oxygen will be evident in the off gas.

After reduction, the reduced supported catalyst component is cooled to about room temperature, e.g. about 25°C, in an inert atmosphere, such as argon or nitrogen, to flush out the carbon monoxide. After this flushing treatment, the catalyst is kept away from contact with either carbon monoxide or oxygen.

### Cocatalyst

The cocatalyst is selected from the group consisting of trialkyl boron compounds, dialkyl aluminum alkoxide compounds, trialkyl aluminium compounds, and mixtures thereof. The preferred cocatalyst is selected from the group consisting of triethylborane, diethylaluminum ethoxide, triethylaluminum, and mixtures thereof. By far the most preferred cocatalysts are triethylborane and diethylaluminum ethoxide.

The cocatalyst is used in an amount within the range of about 0.5 to about 10 weight percent based on the weight of the reduced supported chromium component being treated, with about 1 to about 8 weight percent being preferred. The blue color of the reduced supported catalyst component can change to greenish-blue after treatment, however, it is believed the chromium remains in the divalent state. Stated in units of milligrams of cocatalyst per kilograms of reactor contents (mg/kg) the cocatalyst is used in an amount within the range of about 0.5 to about 20, preferably about 2 to about 8 mg/kg based on contents in the reactor.

### Precontacting Catalyst And Cocatalyst

The order of addition of the components is critical to the operation of this invention. It is essential that the cocatalyst and the reduced supported catalyst, which comprises silica, titania, and chromium, be precontacted prior to contact with the monomer. In a batch operation this can be carried out by either pre-treating the supported catalyst component with the cocatalyst and then adding the resulting composition to the reactor or the supported catalyst and cocatalyst can be added as separate streams to the reactor and thereafter the monomer can be added. It is preferred, however, to utilize a precontacting vessel. In this manner, the supported catalyst and the cocatalyst can be introduced either continuously or batchwise generally utilizing a solution of the cocatalyst in a solvent or diluent, preferably the same material being used as a solvent or diluent in the subsequent polymerization reaction. In this precontacting vessel, agitation is provided by means of a stirrer, for example to obtain free precontacting of the supported catalyst component and the cocatalyst.

Thereafter, the resulting supported catalyst/cocatalyst composition is introduced into the reactor. Preferably, the precontacting is carried out immediately prior to the introduction of the supported catalyst/cocatalyst composition into the reactor, although the resulting supported catalyst/cocatalyst composition can be stored under inert conditions if desired prior to being utilized in a polymerization reaction.

Precontacting of the supported catalyst and cocatalyst is primarily contemplated for in situ generation of one or more olefin comonomers in a polymerization reaction utilizing an essentially pure ethylene feed. By pure ethylene feed is meant polymerization grade ethylene free of any significant amount of other monomers. In addition to comonomer generated in situ, it is also possible to affirmatively introduce additional comonomer in order to form an ethylene copolymer. However, the affirmative introduction of comonomer would dilute one important aspect of the invention, which is the economy effected by being able to produce copolymers without the use of a separate comonomer feedstream.

### Polymer Characteristics

This invention provides a novel method to control polymer density by regulating the amount of hydrogen gas added to the polymerization reactor. Electrolytic grade hydrogen, for instance, is added directly to the polymerization reactor to yield a concentration in the range of about 0.05 to about 5 mole percent of hydrogen in the reactor, based on the reactor diluent, such as isobutene. Preferably, the hydrogen concentration in the reactor is in the range of about 0.1 to about 4 mole percent; most preferably, the hydrogen concentration is in the range of about 0.2 to about 2 mole percent. Generally, a higher mole percent of hydrogen results in a lower polymer density. Hydrogen can be used to regulate the ethylene polymer density in the range of about 0.915 to about 0.965 g/ml, although generally, polymer density ranges from about 0.920 to about 0.960 g/ml, with the use of hydrogen.

Other methods are also available to control polymer density. These methods can be used in conjunction with this invention. An increase in the amount of cocatalyst precontacted with the catalyst will increase the amount of in-situ generated comonomer. Generation of more comonomer results in a lower density polymer. Generally, polymers in the density range of about 0.930 to about 0.955 g/ml are made by regulating cocatalyst concentrations. In addition, a small amount of comonomer can be affirmatively added as noted hereinabove to fine tune the density if desired. Furthermore, reactor temperature can also be adjusted to control polymer density. However, the reaction must be closely monitored because an increase in temperature, which decreases polymer density, can cause the polymer to dissolve into the reactant solution, or the reactor diluent.

The addition of hydrogen not only controls polymer density, but surprisingly, also affects the free olefin distribution, as shown by free olefin concentrations in the polymerization reactor. In other words, hydrogen used in conjunction with a polymerization process wherein comonomers are generated in-situ can be used to control the quantity of comonomers generated. Primarily, comonomers of butene, hexene, and octene are produced. In addition, smaller amounts of higher olefins, from decene to at least eicosene, are also produced. In general, higher concentrations of hydrogen in the polymerization reactor produce a broad, more evenly distributed range of comonomers generated in-situ. Thus, a higher hydrogen concentration will produce lower ratios of hexene to butene (C₆⁼/C₄⁼) and hexene to octene (C₆⁼/C₈⁼). If it is desirable for the comonomer to be primarily hexene, less hydrogen must be added to the polymerization reactor.

Selection of the cocatalyst that is precontacted with the catalyst, in conjunction with the addition of hydrogen in the polymerization reactor, is a means to further control the C₆⁼/C₄⁼ and C₆⁼/C₈⁼ ratios. When diethylaluminum ethoxide (DEALE) is used as the cocatalyst, greater concentrations of butene and octene, relative to the hexene concentration, are generated.

Varying the precontacted cocatalyst and/or varying the hydrogen concentration in the reactor enables control of the C₆⁼/C₄⁼ ratio to be in the range of about 0.5 to about 5. Usually, the C₆⁼ /C₄⁼ ratio will be in the range of about 1 to about 4.5. The C₆⁼ /C₈⁼ ratio can be controlled, by hydrogen concentration in the reactor and/or the precontacted cocatalyst, to be within the range of about 2 to about 5; usually, the C₆⁼/C₈⁼ ratio is in the range of about 2.2 to about 5.

Hydrogen concentration in the polymerization reactor also affects the olefin branch distribution in the resultant ethylene polymer, as shown by the mole percent ratios of ethyl to n-butyl (C₂/C₄) short chain branches (SCBs). Lower concentrations of hydrogen produce lower C₂/C₄ mole percent ratios; increasing the hydrogen concentration in the polymerization reactor increases the C₂/C₄ mole percent ratio. Furthermore, higher hydrogen concentrations raise the total mole percent of short chain branches, as well as the number of short chain branches per 10,000 backbone carbons, in the ethylene polymer.

Similar to the C₆⁼/C₄⁼ and C₆⁼/C₈⁼ free olefin ratios, selection of the cocatalyst that is precontacted with the catalyst, in conjunction with the addition of hydrogen in the polymerization reactor, is a way to further control the C₂/C₄ mole percent ratio, the total mole percent of SCBs in the ethylene polymer, and the total number of SCBs per 10,000 backbone carbons in the ethylene polymer. When diethylaluminum ethoxide (DEALE) is used as the cocatalyst, higher ratios, total mole percents, and total SCBs are produced than when triethylborane (TEB) is the cocatalyst.

### Reaction Conditions

Polymerization can be carried out in any manner known in the art such as gas phase, solution or slurry conditions to effect polymerization. A stirred reactor can be utilized for a batch process, or the reaction can be carried out continuously in a loop reactor or in a continuous stirred reactor.

A preferred polymerization technique is that which is referred to as a particle form or slurry process wherein the temperature is kept below the temperature at which polymer goes into solution. Such polymerization techniques are well known in the art and are disclosed, for instance, in Norwood, U.S. 3,248,179.

The preferred temperature in the particle form process is within the range of about 185° to about 230°F (85° to 110°C). Two preferred polymerization methods for the slurry process are those employing a loop reactor of the type disclosed in Norwood and those utilizing a plurality of stirred reactors either in series, parallel or combinations thereof wherein the reaction conditions are different in the different reactors. For instance, in a series of reactors a chromium catalyst which has not been subjected to the reduction step can be utilized either before or after the reactor utilizing the catalyst system of this invention. In another specific instance, a conventional chromium oxide on a predominantly silica support can be utilized in a reactor in parallel with a reactor utilizing the catalyst system of this invention and the resulting polymerization influence combined prior to recovering the polymer.

The molecular weight of the polymer can be controlled by various means known in the art such as adjusting the temperature (higher temperature giving lower molecular weight) and introducing additional hydrogen to lower the molecular weight or varying the catalyst compounds.

### Examples

The following examples illustrate various aspects of the invention. Data is included for each example about the polymerization conditions, as well as the resultant polymer. Ethylene concentration in the loop-type polymerization reactor, in every run except number 104, was about 7 to about 8 weight percent. Ethylene concentration in run number 104 was about 8 to about 9 weight percent. The cocatalysts used were either triethylborane (TEB) or diethylaluminum ethoxide (DEALE).

Density was determined in grams per cubic centimeter (g/ml) on a compression molded sample, cooled at about 15°C per hour, and conditioned for about 40 hours at room temperature in accordance with ASTM D1505 and ASTM D1928, condition C. The high load melt index (HLMI) was determined in accordance with ASTM D1238 at 190°C with a 21,600 gram weight. Melt index (MI) was determined according to ASTM D1238 at 190°C with a 2,160 gram weight.

### Example I

The data in Table I show that an increase in hydrogen concentration in the polymerization reactor results in a decrease in the resultant polymer density. The reactor temperature in run number 101 was about 97°C; in runs 102, 103, and 104, the reactor temperature was about 93°C. The polymerization catalyst system used in runs 101 and 102 contained about 13 weight percent titanium oxide (TiO₂). The catalyst system used in runs 103 and 104 contained about 8 weight percent TiO₂.

**Table I**

| Run No. | H₂, Mol % | TEB, mg/kg | Density, g/ml | HLMI | MI | HIMI/MI |
|---|---|---|---|---|---|---|
| 101 | 0 | 13 | 0.949 | 9.3 | 0.04 | 232 |
| 102 | 1.3 | 11 | 0.945 | 20.1 | 0.16 | 126 |
| 103 | 1.0 | 4 | 0.940 | 23.0 | 0.31 | 74 |
| 104 | 1.5 | 4 | 0.937 | 21.1 | 0.28 | 75 |

The concentration of hydrogen in a polymerization reactor which uses a carbon monoxide reduced catalyst system has a direct impact on the resultant polymer density. Under substantially comparable conditions in runs 101 and 102, an increase in hydrogen concentration lowered the polymer density. The same result is observed in runs 103 and 104, wherein substantially comparable conditions were maintained.

### Example II

The data in Table II illustrate the effect hydrogen and cocatalyst have on the concentration of free olefins in the polymerization reactor. When TEB was the cocatalyst, the catalyst system used comprised about 8 weight percent TiO₂ and the reactor temperature was about 97°C. When the cocatalyst was DEALE, the catalyst system used comprised about 13 weight percent TiO₂ and the reactor temperature was about 93°C. Off-gas samples of the reactor were analyzed for weight percent of free olefin.

**Table II**

| Run No. | H₂, Mol % | TEB, mg/kg | DEALE, mg/kg | C₆⁼/C₄⁼ | C₆⁼/C₈⁼ | Density, g/ml |
|---|---|---|---|---|---|---|
| 201 | 0.2 | 12 | 0 | 4.17 | 4.76 | 0.942 |
| 202 | 1.0 | 4 | 0 | 1.64 | 4.35 | 0.939 |
| 203 | 1.0 | 4 | 0 | 1.75 | 4.76 | 0.940 |
| 204 | 1.5 | 2 | 0 | 1.56 | 3.85 | 0.938 |
| 205 | 1.3 | 0 | 10 | 0.74 | 2.94 | 0.931 |

This example shows that when a lower concentration of hydrogen is added to the polymerization reactor, more hexene, relative to butene and octene, will be produced. Hydrogen has a more significant impact on the C₆⁼/C₄⁼ ratio than the C₆⁼/C₈⁼ ratio. Additionally, it is shown that selection of DEALE as the cocatalyst further reduces the relative hexene concentration in the polymerization reactor. This example also shows, as in Example I, that increasing the concentration of hydrogen in the polymerization reactor will lower the resultant polymer density.

### Example III

The data in Table III show that in this invention, the addition of hydrogen to a polymerization reactor produces a novel process to regulate and control the resultant copolymer. The mole percent ratio of n-butyl to ethyl (C₄/C₂) short chain branches (SCBs), the total mole percent of polymer SCBs, and the number of SCBs per 10,000 backbone carbon atoms can be controlled by the addition of hydrogen. Furthermore, selection of the precontacted cocatalyst is an additional means of polymer control.

Runs 302, 303, 304, and 305 used a catalyst system which comprised about 8 weight percent TiO₂. The reactor temperature in runs 301, 302, and 303 was about 97°C; the reactor temperature in runs 304 and 305 was about 93°C. Run 306 used a catalyst system which comprised about 13 weight percent TiO2 and the reactor temperature was about 89°C. The samples were analyzed for SCBs by C-13 NMR spectroscopy.

**Table III**

| Run No. | H₂, Mol % | TEB, mg/kg | DEALE, mg/kg | C₄/C₂ | Total SCBs, Mol % | SCBs/10,000 Backbone Carbons | Density, g/ml |
|---|---|---|---|---|---|---|---|
| 302 | 0.2 | 12 | 0 | 1.79 | 0.74 | 37 | 0.941 |
| 303 | 1.0 | 11.5 | 0 | 1.75 | 1.14 | 57 | 0.937 |
| 304 | 1.5 | 2 | 0 | 1.11 | 1.46 | 73 | 0.935 |
| 305 | 1.5 | 4 | 0 | 1.17 | 1.44 | 72 | 0.935 |
| 306 | 1.3 | 0 | 10.6 | 0.58 | 2.98 | 149 | 0.926 |

This example clearly demonstrates that increasing hydrogen concentration in the polymerization reactor will decrease the SCB mole percent ratio of C₄ to C₂, increase the total mole percent of polymer SCBs, and increase the number of SCBs per 10,000 backbone carbons. If DEALE is the precontacted cocatalyst, these values can be varied even more significantly. This example also demonstrates, again, that increasing the polymerization reactor hydrogen concentration will decrease the resultant polymer density.

## Claims

1. A process for producing an ethylene copolymer having a density in the range of 0.915 to 0.965 g/ml
**characterized by**
subjecting to polymerization an ethylene feedstock in the presence of a catalyst composition comprising
(a) a catalyst having a chromium component on a silica-titania cogel support comprising from 8 to 19 weight percent titania obtained by heat-activation in an oxygen-containing ambient to convert at least a portion of any chromium in a lower valent state to the hexavalent state, followed by treatment with carbon monoxide under reducing conditions, and
(b) a cocatalyst selected from trialkyl boron compounds, dialkyl aluminum alkoxide compounds, trialkyl aluminum compounds, and mixtures thereof,
wherein said (a) and (b) are premixed in an inert ambient prior to contacting said ethylene;
and by introducing hydrogen during said polymerization in such an amount to control the density of the produced copolymer within the aforesaid range.

2. The process of claim 1, characterized by being carried out in a reactor connected in series with a second reactor utilizing a different catalyst.

3. The process of any of the preceding claims, characterized in that said heat-activation has been carried out in air at a temperature within the range of 400 to 900 °C.

4. The process of any of the preceding claims, characterized in that said carbon monoxide treatment has been carried out at a temperature within the range of 300 to 500 °C.

5. The process of any of the preceding claims, characterized in that said copolymer has a density in the range of 0.920 to 0.960 g/ml.

6. The process of any of the preceding claims, characterized in that the carbon monoxide-treated supported catalyst (a) is contacted with a hydrocarbon solution of said cocatalyst (b) in a mixing vessel.

7. The process of any of the preceding claims, characterized in that said cocatalyst is selected from triethylborane, diethylaluminum ethoxide and triethylaluminum.

8. The process of any of the preceding claims, characterized in that said hydrogen is electrolytic grade hydrogen.

9. The process of any of the preceding claims, characterized in that said hydrogen is added to the polymerization reactor in a concentration in the range of 0.05 to 5 mole percent, based on reactor diluent.

10. The process of claim 1 carried out continuously under slurry polymerization conditions in the presence of a catalyst composition comprising
(a) a catalyst with a chromium component on a silica-titania cogel support containing from 8 to 19 weight percent titania, obtained by heat-activation at a temperature in the range of 400 to 900 °C for a time of 0.5 to 50 hours, followed by carbon monoxide-treatment at a temperature in the range of 300 to 500 °C, and
(b) a cocatalyst selected from triethylborane and diethylaluminum ethoxide in an amount from 0.5 to 10 weight percent, based on the weight of the supported chromium component,
wherein the amount of hydrogen intruduced is from 0.05 to 5 mole percent, based on reactor diluent, and wherein the reactor temperature is maintained in the range of 85 to 110 °C.

## Patentansprüche

1. Verfahren zur Herstellung eines Ethylencopolymeren mit einer Dichte im Bereich von 0,915 bis 0,965 g/ml, gekennzeichnet dadurch,
daß man ein Ethyleneinsatzmaterial einer Polymerisation in Gegenwart einer Katalysatorzusammensetzung mit einem Gehalt an folgenden Bestandteilen unterwirft:
(a) ein Katalysator mit einer Chromkomponente auf einem Siliciumdioxid-Titanoxid-Cogel-Träger mit einem Titanoxidgehalt von 8 bis 19 Gew.-%, der durch Wärmeaktivierung in einer sauerstoffhaltigen Umgebung zur Umwandlung von mindestens einem Teil von etwaigem Chrom in einem niedrigeren Wertigkeitszustand zum sechswertigen Zustand unter anschließender Behandlung mit Kohlenmonoxid unter reduzierenden Bedingungen erhalten worden ist, und
(b) ein Cokatalysator, der unter Trialkylborverbindungen, Dialkylaluminiumalkoxidverbindungen, Trialkylaluminiumverbindungen und Gemischen davon ausgewählt ist,
wobei (a) und (b) in einer inerten Umgebung vor dem Kontakt mit dem Ethylen vorgemischt sind; und
daß man Wasserstoff während der Polymerisation in einer solchen Menge zuführt, daß die Dichte des gebildeten Copolymeren innerhalb des vorgenannten Bereichs gesteuert wird.

2. Verfahren nach Anspruch 1, dadurch gekennzeichnet, daß es in einem Reaktor durchgeführt wird, der in Serie mit einem zweiten, sich eines unterschiedlichen Katalysators bedienenden Reaktor verbunden ist.

3. Verfahren nach einem der vorstehenden Ansprüche, dadurch gekennzeichnet, daß die Wärmeaktivierung in Luft bei einer Temperatur im Bereich von 400 bis 900°C durchgeführt worden ist.

4. Verfahren nach einem der vorstehenden Ansprüche, dadurch gekennzeichnet, daß die Kohlenmonoxidbehandlung bei einer Temperatur im Bereich von 300 bis 500°C durchgeführt worden ist.

5. Verfahren nach einem der vorstehenden Ansprüche, dadurch gekennzeichnet, daß das Copolymer eine Dichte im Bereich von 0,920 bis 0,960 g/ml aufweist.

6. Verfahren nach einem der vorstehenden Ansprüche, dadurch gekennzeichnet, daß der mit Kohlenmonoxid behandelte, auf einen Träger aufgebrachte Katalysator (a) mit einer Kohlenwasserstofflösung des Cokatalysators (b) in einem Mischgefäß in Kontakt gebracht wird.

7. Verfahren nach einem der vorstehenden Ansprüche, dadurch gekennzeichnet, daß der Cokatalysator unter Triethylboran, Diethylaluminiumethoxid und Triethylaluminium ausgewählt ist.

8. Verfahren nach einem der vorstehenden Ansprüche, dadurch gekennzeichnet, daß es sich beim Wasserstoff um Wasserstoff von elektrolytischer Qualität handelt.

9. Verfahren nach einem der vorstehenden Ansprüche, dadurch gekennzeichnet, daß der Wasserstoff dem Polymerisationsreaktor in einer Konzentration im Bereich von 0,05 - 5 Mol-%, bezogen auf das Reaktorverdünnungsmittel, zugesetzt wird.

10. Verfahren nach Anspruch 1, kontinuierlich durchgeführt unter Aufschlämmungspolymerisationsbedingungen in Gegenwart einer Katalysatorzusammensetzung mit einem Gehalt an folgenden Bestandteilen
(a) ein Katalysator mit einer Chromkomponente auf einem Siliciumdioxid-Titanoxid-Cogel-Träger mit einem Titandioxidgehalt an 8 bis 19 Gew.-% , erhalten durch Wärmeaktivierung bei einer Temperatur im Bereich von 400 - 900°C für eine Zeitspanne von 0,5 bis 50 Stunden unter anschließender Kohlenmonoxidbehandlung bei einer Temperatur im Bereich von 300 - 500°C und
(b) ein Cokatalysator, der unter Triethylboran und Diethylaluminiumethoxid ausgewählt ist, in einer Menge von 0,5 - 10 Gew.-%, bezogen auf das Gewicht der auf den Träger aufgebrachten Chromkomponente,
wobei die Menge des zugesetzten Wasserstoffs 0,05 bis 5 Mol-%, bezogen auf das Reaktorverdünnungsmittel, beträgt und wobei die Reaktionstemperatur im Bereich von 85 bis 110°C gehalten wird.

## Revendications

1. Procédé pour fabriquer un copolymère d'éthylène ayant une masse spécifique dans la gamme comprise entre 0,915 et 0,965 g/ml, caractérisé en ce qu'on soumet à polymérisation une charge d'alimentation en éthylène en présence d'une composition de catalyseur comprenant :
(a) un catalyseur comportant un composant en chrome sur un support d'un cogel silice-oxyde de titane comprenant de 8 à 19 % en poids d'oxyde de titane, obtenu par activation thermique dans une ambiance contenant de l'oxygène afin de faire passer au moins une partie du chrome d'un état de valence plus faible à l'état hexavalent, ce qu'on fait suivre du traitement avec du monoxyde de carbone dans des conditions réductrices; et
(b) un cocatalyseur choisi parmi des composés de trialkylbore, des composés d'alkylate de dialkylaluminium, des composés de trialkylaluminium, et de leurs mélanges,
où lesdits (a) et (b) sont mélangés au préalable dans une ambiance inerte avant mise en contact avec ledit éthylène;
et on introduit de l'hydrogène pendant ladite polymérisation dans une quantité elle qu'il y a régulation de la masse spécifique du copolymère obtenu dans la gamme indiquée ci-dessus.

2. Procédé selon la revendication 1, caractérisé en ce qu'il est exécuté dans un réacteur monté en série avec un second réacteur utilisant un catalyseur différent.

3. Procédé selon l'une quelconque des revendications précédentes, caractérisé en ce que ladite activation thermique est effectuée dans l'air à une température comprise dans la gamme allant de 400 et 900°C.

4. Procédé selon l'une quelconque des revendications précédentes, caractérisé en ce que ledit traitement au monoxyde de carbone est effectué à une température comprise dans la gamme allant de 300 et 500°C.

5. Procédé selon l'une quelconque des revendications précédentes, caractérisé en ce que ledit copolymère a une masse spécifique comprise dans la gamme allant de 0,920 à 0,960 g/ml.

6. Procédé selon l'une quelconque des revendications précédentes, caractérisé en ce que le catalyseur (a) supporté, traité au monoxyde de carbone, est mis en contact avec une solution d'hydrocarbure dudit cocatalyseur (b) dans un récipient de mélange.

7. Procédé selon l'une quelconque des revendications précédentes, caractérisé en ce qu'on choisit ledit cocatalyseur parmi le triéthylborane, l'éthylate de diéthyaluminium et le triéthylaluminium.

8. Procédé selon l'une quelconque des revendications précédentes, caractérisé en ce que ledit hydrogène est de l'hydrogène de la qualité électrolytique.

9. Procédé selon l'une quelconque des revendications précédentes, caractérisé en ce qu'on ajoute ledit hydrogène au réacteur de polymérisation dans une concentration comprise dans la gamme allant de 0,05 à 5 moles % par rapport au diluant du réacteur.

10. Procédé selon la revendication 1, exécuté en continu dans des conditions de polymérisation d'une bouillie en présence d'une composition de catalyseur comportant :
(a) un catalyseur avec un composant en chrome sur un support d'un cogel silice-oxyde de titane contenant de 8 à 19 % en poids d'oxyde de titane, qu'on obtient par activation thermique à une une température dans la gamme allant de 400 à 900°C pendant une durée de 0,5 à 50 heures, ce qu'on fait suivre d'un traitement au monoxyde de carbone à une température comprise dans la gamme allant de 300 à 500°C, et
(b) un cocatalyseur choisi parmi le triéthylborane et l'éthylate de diéthylaluminium selon une quantité comprise entre 0,5 et 10 % en poids, par rapport au poids du composant supporté en chrome,
où la quantité de l'hydrogène introduit est comprise entre 0,5 et 5 moles %, par rapport à un diluant du réacteur, et où l'on maintient la température du réacteur dans la gamme allant de 85 à 110°C.
